# FASCICULE DE BREVET EUROPEEN

(11) **EP 3 128 840 B1**
(45) Date de publication et mention de la délivrance du brevet: **28.09.2022**
(21) Numéro de dépôt: 15720370.4
(22) Date de dépôt: 08.04.2015
(51) Int. Cl.: A01N 43/16, A01P 21/00, C05B 17/00, C05B 17/02, C05G 3/00

(54) **PRODUIT FERTILISANT ET BIOSTIMULANT CONTENANT DES FRUCTO-OLIGOSACCHARIDES, PROCEDE D'APPLICATION ET UTILISATIONS.**
DÜNGUNGS- UND BIOSTIMULIERUNGSPRODUKT MIT FRUCTOOLIGOSACCHARIDEN, ANWENDUNGSVERFAHREN UND VERWENDUNGEN
FERTILIZING AND BIO STIMULATING PRODUCT CONTAINING FRUCTO OLIGOSACCHARIDES, APPLICATION METHOD AND USES

(30) Priorité: 09.04.2014 FR 1453157
(43) Date de publication de la demande: 15.02.2017
(73) Titulaire: Agro Innovation International, 35400 Saint-Malo (FR)
(72) Inventeur: ERRO GARCES, Javier, E-31118 Pamplona (ES); URRUTIA SAGARDIA, Oscar, E-31004 Pamplona (ES); GARNICA OCHOA, Maria, E-31262 Allo (ES); LEMENAGER, Diane, F-35400 Saint Malo (FR); CASANOVA PORTILLO, Esther, E-31012 Pamplona (ES); GARCIA-MINA FREIRE, José Maria, E-31170 Iza (ES); YVIN, Jean-Claude, F-35400 Saint Malo (FR)
(74) Mandataire: Cabinet Beau de Loménie
(86) Numéro de dépôt international: PCT/FR2015/050917
(87) Numéro de publication internationale: WO 2015/155476

(56) Documents cités:
- WO-A1-98/46081
- US-A- 5 733 579
- Beghin Meiji: "Profeed", , 5 juillet 2007 (2007-07-05), page 1, XP055145631, France Extrait de l'Internet: URL:http://www.beghin-meiji.com/feed/fiche _prod.php?ID=60 [extrait le 2014-10-10]
- Jong Pil Park ET AL: "Critical effect of ammonium ions on the enzymatic reaction of a novel transfructosylating enzyme for fructooligosaccharide production from sucrose", Biotechnology Letters, 1 novembre 1999 (1999-11-01), pages 987-990, XP055145563, Dordrecht DOI: 10.1023/A:1005685829219 Extrait de l'Internet: URL:http://search.proquest.com/docview/735 164731 [extrait le 2014-10-09]
- PENG YING ZHANG ET AL: "A Novel Burdock Fructooligosaccharide Induces Changes in the Production of Salicylates, Activates Defence Enzymes and Induces Systemic Acquired Resistance to Colletotrichum orbiculare in Cucumber Seedlings", JOURNAL OF PHYTOPATHOLOGY, vol. 157, no. 4, 1 avril 2009 (2009-04-01) , pages 201-207, XP055145259, ISSN: 0931-1785, DOI: 10.1111/j.1439-0434.2008.01465.x

## Description

La présente invention concerne l'utilisation de fructo-oligosaccharides comme éliciteurs des mécanismes d'absorption des nutriments minéraux, et comme agents stimulant la défense des plantes vis-à-vis des pathogènes.

L'invention concerne également des produits fertilisants et biostimulants contenant de tels fructo-oligosaccharides, ainsi qu'un procédé d'épandage de ces fructo-oligosaccharides sur des cultures.

La nécessité d'augmenter l'efficacité des pratiques agricoles est soumise à des contraintes à la fois économiques et environnementales.

Une des stratégies pour augmenter les rendements consiste à produire des engrais plus efficaces, par exemple en réduisant les pertes d'éléments nutritifs dans le sol. Ainsi, l'uréase et des inhibiteurs de nitrification ont été utilisés dans le but de diminuer la volatilisation de l'ammoniac et le lessivage des nitrates.

Une autre stratégie complémentaire consiste à développer des molécules qui augmentent la capacité de la plante à absorber les nutriments du sol, ou à stimuler ses défenses naturelles vis-à-vis des pathogènes. Récemment, un fructo-oligosaccharide comprenant treize unités fructose a été décrit comme activateur de croissance de plantes à différents stades de développement (CN 2007/101006777 et J. Phytopathol., 157, pp 201-207, 2009). Cet effet est attribué à l'activation de la production d'acide salicylique et de son homologue glycosilé dans les feuilles des plantes traitées. Le fructo-oligosaccharide est obtenu par extraction de racines de bardane (*Arctium lappa*) en phase aqueuse, suivie d'une déprotononation enzymatique, précipitation dans l'éthanol et purification par chromatographie.

L'invention porte sur des fructo-oligosaccharides de poids moléculaire inférieur à celui du fructo-oligosaccharide décrit dans l'art antérieur. Les inventeurs ont en effet découvert que ces fructo-oligosaccharides provoquent un meilleur taux d'absorption des nutriments par les racines des plantes, et stimulent davantage les défenses naturelles de la plante. Cet effet concerne tous les nutriments minéraux, en particulier l'azote, le phosphore et le calcium. Les fructo-oligosaccharides utilisés dans le cadre de l'invention ont en effet une meilleure solubilité dans l'eau que les fructo-oligosaccharides de l'art antérieur. Les inventeurs ont trouvé l'inuline ne peut pas être appliquée sous la forme d'un engrais en solution aqueuse, car ce composé ne peut pas rester stable dans la solution mère avant sou application sur les cultures.

Le produit de l'invention permet une production d'azote organique accrue dans la plante répondant aux besoins de croissance de la culture, qui s'exprime par une augmentation de rendement. Le produit de l'invention permet également une augmentation de la teneur en protéines et de la valeur nutritionnelle des protéagineux et des fourrages. Le produit de l'invention permet encore de réduire les risques de toxicité provoquée par une accumulation excessive d'ions ammonium au niveau foliaire ou de réduire les accumulations de nitrates dans les feuilles.

La demande WO 98/46081 divulgue de la mélasse de canne à sucre contenant 1-2% de kestose (GF3). Elle est utilisée en association avec un engrais pour améliorer la croissance des plantes.

Jong Pil Park et al. ont décrit l'utilisation d'un fructo-oligosaccharide comprenant six unités osidiques (le Glucose-(Fructose)₅) dans une composition fertilisante (Biotech. Letters, 01.11.1999, 987-990).

Enfin, dans le brevet US 5 733 579 décrit une solution de réhydratation orale pour le traitement thérapeutique de la diarrhée : une de ces solutions contient du nystose ou du kestose en association avec du chlorure de potassium.

La présente invention a ainsi pour objet une composition fertilisante et/ou biostimulante contenant des fructo-oligosaccharides ainsi qu'un procédé de traitement des plantes ou des sols les utilisant.

Dans le cadre de la présente description, on entend désigner par l'expression « composition fertilisante » tout produit dont l'emploi est destiné à assurer ou à améliorer la nutrition des végétaux.

Par « fructo-oligosaccharide », on entend un composé comportant plusieurs motifs fructose et éventuellement un autre motif osidique.

Dans le cadre de la présente description, on entend désigner par l'expression « composition biostimulante » tout produit dont l'emploi est destiné à assurer ou à la capacité des végétaux à stimuler le métabolisme foliaire ou racinaire des plantes.

Selon un premier aspect, l'invention a pour objet une composition fertilisante et/ou biostimulante comprenant une ou plusieurs matières fertilisantes choisies parmi l'urée, le sulfate d'ammonium, le nitrate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique et l'acide borique contenant au moins un fructo-oligosaccharide (FOS) comprenant de 2 à 10 unités osidiques, lequel fructo-oligosaccharide est éventuellement sulfaté. La composition contient en outre un mélange de composés Glucose-(Fructose)n ou Mannose-(Fructose)n tels que n va de 1 à 3.Le fructo-oligosaccharide est de préférence en quantité efficace dans la composition pour provoquer l'effet recherché.

La quantité de FOS apportée aux plantes doit être suffisante pour stimuler l'élicitation des mécanismes d'absorption des nutriments inorganiques. Cette quantité est variable selon la nature de la plante à traiter et le mode de traitement (voie foliaire ou voie racinaire). Cette quantité pourra notamment être déterminée au cas par cas par la mise en œuvre de tests macroarrays tels que définis ci-dessous.

Les fructo-oligosaccharides utilisés dans la cadre de la présente invention sont des polymères comprenant un moins un motif fructose et au moins un motif ose choisi parmi le glucose et le mannose.

Le fructo-oligosaccharide (FOS) comprenant de 2 à 10 unités osidiques (2 et 10 étant inclus), comprend au moins un fructose. Le fructo-oligosaccharide (FOS) utilisé dans la cadre de la présente invention peut comprendre de 2 à 9 unités osidiques (2 et 9 étant inclus), ou de 2 à 8 unités osidiques (2 et 8 étant inclus), ou encore de de 2 à 7 unités osidiques (2 et 7 étant inclus), ou encore de 2 à 6 unités osidiques (2 et 6 étant inclus), par exemple de 2 à 6 unités osidiques (2 et 6 étant inclus), de 2 à 5 unités osidiques (2 et 5 étant inclus, de 2 à 4 unités osidiques (2 et 4 étant inclus). La composition de la présente invention comprend un mélange de composés Glucose-(Fructose)ₙ ou Mannose-(Fructose)ₙ tels que n va de 1 à 3 (1 et 3 étant inclus).

Les composés Glucose-(Fructose)ₙ peuvent être choisis dans le groupe constitué des composés nystose (GF₂), kestose (GF₃), bifurcose (GF₃) tels que G=glucose).

Les FOS peuvent être obtenus à partir des espèces précitées par un procédé comportant des étapes de lavage, broyage, extraction (séparation solide-liquide), et éventuellement fractionnement et concentration.

Les FOS peuvent être également obtenus par hydrolyse acide ou enzymatique, à partir des extraits précités.

Selon un mode de réalisation de l'invention, les fructo-oligosaccharides sont obtenus par hydrolyse d'inuline ou par hydrolyse d'oligosaccharides obtenus à partir de l'inuline. L'hydrolyse peut être conduite par voie enzymatique, chimique ou microbienne (par exemple par *Bifidobacterium*).

Selon un mode de réalisation particulier de l'invention, les fructo-oligosaccharides sont obtenus par hydrolyse enzymatique de l'inuline.

L'inuline est un polysaccaharide constitué de motifs D-fructose liés par des liaisons β(2-1) et d'une terminaison D-glucose lié par une liaison α(1-2). Le degré de polymérisation de l'inuline est généralement de l'ordre de 40 à 60 unités osidiques.

L'inuline peut être extraite de la racine de différentes plantes, en particulier le topinambour et la chicorée.

L'extrait végétal contenant des FOS obtenu selon l'un des procédés décrits précédemment peut être plus ou moins concentré selon l'utilisation envisagée. Une déshydratation totale de l'extrait permet sa présentation sous forme pulvérulente hydrosoluble. La déshydratation peut être obtenue par séchage en tambour ou par atomisation.

Alternativement, les fructo-oligosaccharides peuvent être obtenus par synthèse chimique.

Selon une variante, les fructo-oligosaccharides peuvent être obtenus par transfructosylation du saccharose, par exemple par l'action de transfructosylation d'un fructosidase ß-Aspergillus Niger sur du saccharose.

Les fructo-oligosaccharides peuvent être sulfatés, par exemple par réaction d'un FOS tel que décrit précédemment avec de l'acide sulfurique en présence de pyridine.

Les FOS décrits précédemment peuvent être utilisés seuls ou en mélange avec des engrais minéraux, pour préparer le produit fertilisant et/ou biostimulant de l'invention.

On sait que les engrais se définissent comme des matières fertilisantes dont la fonction principale est d'apporter aux plantes des éléments directement utiles à leur nutrition (éléments fertilisants majeurs, éléments fertilisants secondaires et oligo-éléments).

A cet effet, les engrais racinaires ou foliaires utilisent généralement des sources d'azote, de phosphore et de potassium ainsi que des oligo-éléments et des acides aminés.

Les plantes absorbent principalement l'azote, qui est un élément nutritif essentiel à leur croissance. L'azote est généralement apporté sous la forme de nitrate ou d'ammonium dont l'utilisation en grande quantité pose des problèmes sur le plan écologique.

Le produit fertilisant et/ou biostimulant de l'invention contenant des FOS peut donc être utilisé en complément dans des compositions fertilisantes classiques, telles que des engrais, afin d'activer l'absorption de l'azote minéral et son assimilation sous forme de protéines.

Le produit fertilisant et/ou biostimulant de l'invention peut donc contenir une ou plusieurs matières fertilisantes choisies parmi l'urée, le sulfate d'ammonium, le nitrate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique et l'acide borique.

Le produit de l'invention peut contenir des agents biostimulants choisis parmi les acides humiques, les extraits d'algues marines, des acides aminés, des phytohormones ou un de leurs mélanges.

Le fructo-oligosaccharide (FOS) représente par exemple de 0,1 à 10% en poids, par exemple 1% en poids, du poids de la composition.

Lorsqu'il est formulé sous forme liquide, le produit de l'invention contient par exemple de 0,1 à 5% en poids de FOS. Lorsqu'il est formulé sous forme solide, le produit de l'invention contient par exemple de 1 à 10% en poids de FOS.

Le produit de l'invention peut se présenter sous la forme d'un produit choisi parmi les amendements calcaires, les amendements organiques et les supports de culture, les engrais racinaires de type NP, PK, NPK, les engrais foliaires ou encore les solutions nutritives racinaires.

L'invention a également pour objet un procédé de fertilisation de plantes pour améliorer leur absorption de nutriments minéraux qui comprend l'application auxdites plantes ou aux sols, d'une composition telle qu'il vient d'être décrit.

L'invention a encore pour objet un procédé pour la biostimulation de plantes des plantes qui comprend l'application auxdites plantes ou aux sols, d'une quantité efficace d'un produit tel que décrit précédemment.

Selon un autre aspect, la présente demande vise à protéger un procédé de traitement des plantes ou des sols destiné à activer les réactions d'élicitation des mécanismes d'absorption des nutriments inorganiques, caractérisée en ce qu'il comprend l'application auxdites plantes ou auxdits sols d'une quantité efficace du mélange de FOS.

Dans un de ces trois procédés, l'application du produit de l'invention ou du mélange de FOS sur les plantes pourra être réalisée par voie foliaire ou par voie racinaire.

D'une façon générale la quantité de FOS apportée aux plantes est de 0,1 g à 100 g par litre, et préférentiellement de l'ordre de 1 g par litre, pour les apports sous forme liquide en foliaire ou dans les solutions nutritives racinaires (hydroponie ou goutte à goutte).

La quantité de FOS apportée aux plantes est par exemple de 10 à 1000 g/ha, de préférence de l'ordre de 200 g/ha, pour les apports sous forme solide, par exemple dans les engrais pulvérulents ou granulés.

Le produit de l'invention peut être utilisé dans un des procédés objets de l'invention aux doses recommandées suivantes:
- Application foliaire: entre 0,5 à 5 kg / ha à un taux de dilution compris entre 0,1-0,5%,
- Application racine - application sur le terrain: 10-50 kg / ha,
- Application racine - fertigation: 10-20 kg / ha par irrigation goutte à goutte à un taux de dilution compris entre 0,1-0,5%.

La présente invention trouve application dans le traitement d'une très grande variété de plantes. Parmi celles-ci, on citera en particulier :
- les plantes de grande culture telles que les céréales (blé, maïs),
- les protéagineux (pois),
- les oléagineux (soja, tournesol),
- les plantes prairials utiles pour l'alimentation animale,
- les cultures spécialisées telles qu'en particulier le maraîchage (laitue, épinards, tomate, melon), la vigne, l'arboriculture (poire, pomme, nectarine), ou l'horticulture (rosiers).

Par l'expression "plante" on entend désigner dans la présente demande la plante considérée dans son ensemble, incluant son appareil racinaire, son appareil végétatif, les graines, semences et fruits.

Selon encore un autre aspect, la présente demande vise à couvrir l'utilisation d'un mélange de composés Glucose-(Fructose)n ou Mannose-(Fructose)n tels que n va de 1 à 3comme éliciteurs des mécanismes d'absorption des nutriments minéraux dans les plantes et comme agent stimulant les défenses naturelles des plantes. Les nutriments minéraux seront en particulier l'azote, le phosphore et le calcium.

La présente invention sera maintenant illustrée par les figures et les exemples non limitatifs suivants. Dans ces exemples, et sauf indication contraire, les pourcentages sont exprimés en poids et la température est la température ambiante.

### Description des figures

La Figure 1 représente la concentration en acide salicylique (exprimée en pmoles/gPF) dans les tiges de plants de tabac alimentés avec une solution nutritive contenant un fructo-oligosaccharide conforme à l'invention (FOS), ou la même solution nutritive sans FOS (C).
La Figure 2 représente la concentration en acide jasmonique (exprimée en pmoles/gPF) dans les tiges de plants de tabac alimentés avec une solution nutritive contenant un fructo-oligosaccharide conforme à l'invention (FOS), ou la même solution nutritive sans FOS (C).
La Figure 3 représente la concentration en acide salicylique (exprimée en pmoles/gPF) dans les tiges de plantes alimentées avec une solution nutritive contenant un fructo-oligosaccharide non conforme à l'invention (FOS Comparatif), ou la même solution nutritive sans FOS (témoin).
La Figure 4 représente la concentration en acide jasmonique (exprimée en pmoles/gPF) dans les tiges de plantes alimentées avec une solution nutritive contenant un fructo-oligosaccharide non conforme à l'invention (FOS Comparatif), ou la même solution nutritive sans FOS (témoin).

### Exemple 1 : Engrais NPK granulé solide contenant un fructo-oliaosaccharide

10 kg d'un fructo-oligosaccharide commercialisé sous la marque Profeed^{®}L95 ont été mélangés avec 250 kg de sulfate d'ammonium, 50 kg d'urée, 300 kg de superphosphate et 300 kg de chlorure de potassium dans un granulateur à tambour en présence de 125 l d'eau à 45 °C. Toutes les matières premières, y compris les fructo-oligosacharides ont été préalablement broyées.

Les granulés ont été séchés dans un séchoir à tambour à 90 °C pendant 15 min.

### Exemple 2 : Engrais NPK hydrosoluble liquide contenant un fructo-oligosaccharide

100 l d'eau ont été mélangés avec 10 kg d'un fructo-oligosaccharide fabriqué et commercialisé sous la marque Profeed^{®}L95. Le mélange a été maintenu sous agitation continue pendant 2-6 heures. La température était préférablement située entre 25-70 °C.

Le liquide contenant le fructo-oligosaccharide a été mélangé avec 10 kg d'urée et 25 kg de phosphate monopotassique. Le mélange a été maintenu sous agitation continue à 25 ° C pendant 24 h, et le produit final a été filtré.

### Exemple 3: Effet d'un fructo-oliaosaccharide sur la vitesse d'absorption d'éléments nutritifs par des jeunes plants de salade

### Méthodologie :

Les essais ont été réalisés sur des jeunes plants de salade (*Lactuca sativa*) de 15 jours cultivés en hydroponie. Les essais ont été réalisés sous serre aux températures de 22°C/16°C jours/nuit, 60% d'humidité et une photopériode de 10 heures.

Les plantules de salade (provenance d'une pépinière) ont été lavées afin de quitter le terreau autour de la racine et cultivées pendant deux jours en hydroponie dans de l'eau afin d'éliminer les éléments nutritifs provenant de la préculture.

On a comparé la vitesse d'absorption des minéraux selon que la solution nutritive contenait du FOS (Traitement) ou non (Témoin).

9 plants de salades (trois lots comprenant chacun trois plants) ont été transférés sur une solution nutritive fraîche contenant 100 mg.l⁻¹ d'un fructo-oligosaccaride commercialisé par la société Beghin Meiji sous la référence Profeed^{®} L95.

9 plants de salades (trois lots comprenant chacun trois plants) ont été transférés sur la même solution nutritive fraîche ne contenant pas de FOS (Témoin).

La solution nutritive contenait: 2 mM de NO₃⁻, 2 mM de PO₄²⁻, 4 mM de K⁺, 1 mM de Ca²⁺, 2 mM de Mg²⁺, 100 µM de Fe, 14 µM de B, 16 µM de Mn, 4µM de Mo et 0,8 µM de Cu. Le pH de la solution a été ajusté à 6 avec KOH.

La quantité des éléments minéraux absorbée a été calculée grâce au suivi de la déplétion de ces éléments dans la solution nutritive pendant une période de 30 heures. Les mesures de nitrate ont été réalisées par chromatographie ionique (Dionex 120) et les mesures des autres éléments (P, Ca, Mg, K, Fe) ont été effectuées par ICP optique (IRIS Intrepid II xdl, Thermo-Electron).

Les plantes ont ensuite été récoltées. La racine et la partie aérienne ont été séparées, pesées puis séchées dans une étuve à air forcé à 45°C pendant 48h afin de déterminer leur poids sec.

### Résultats :

Les résultats ont été soumis à une analyse statistique (ANOVA) grâce au programme STATISTICA 6.0 considérant P<0,05 comme significatif.

Les taux d'absorption racinaire du nitrate, du phosphate et du calcium par les salades ont été reportés dans le tableau suivant. Les résultats sont exprimés en % par rapport au témoin (100%).

| | Nitrate | Phosphate | Calcium |
|---|---|---|---|
| Témoin sans FOS | 100 | 100 | 100 |
| Traitement avec FOS | 112.95 | 159.8 | 119 |

### Exemple 4 : Comparaison de l'effet d'un fructo-oligosaccharide selon l'invention avec un fructo-oligosaccharide non conforme à l'invention

L'impact d'un fructo-oligosaccharide conforme à l'invention et l'impact d'un fructo-oligosaccharide non conforme à l'invention sur la biostimulation ont été comparés en mesurant le taux d'acide jasmonique (phytohormone) dans les tiges de plants de tabac.

En effet, le chemin métabolique de l'acide jasmonique (JA) joue un rôle dans la résistance aux insectes et aux maladies. Une augmentation du taux d'acide jasmonique dans les tissus est donc un bon indicateur de l'augmentation du potentiel de résistance des plants aux agents pathogènes.

L'effet d'un fructo-oligosaccharides (FOS) comprenant de 2 à 10 unités osidiques (commercialisé sous la référence Profeed^{®} L95) a été comparé à l'effet d'un FOS comparatif (commercialisé sous la référence Probiofeed^{®}, contenant 95 % Inuline et 5 % monosaccharides).

### CROISSANCE DES PLANTES

Des plants de tabac mis en germination dans un mélange tourbe/sable (proportion 1/1), ont été transplantés au stade 5 feuilles en pot de 1L en serre.
Le traitement des plantes a été réalisé par une application radiculaire d'une solution aqueuse de 0.3% de FOS, d'une solution aqueuse d'inuline de chicorée (Sigma I2255) à 0.3%, ou de la même solution aqueuse ne contenant pas de Fos ou d'inuline. L'expérience a été effectuée sur cinq plantes pour chaque traitement appliqué.

D'autres oligosaccharides tels que le betamune (B), le Bio-mannanoligosaccharides (MS), mannanoligosaccharide (M) ont été testés soit en solution aqueuse (10 min à 100°C) (B20, Ms20, M20) ou en solution acide (0.1N HCl, 10 min à 100°C, dont le pH a été neutralisé avant l'application aux plantes) (BCl, MsCl, MCl).

### ANALYSES

Les plantes récoltées après l'application du traitement ont été congelées et broyées avec de l'azote liquide pour réaliser l'analyse quantitative de l'acide jasmonique et de l'acide salicylique qu'elles contiennent, selon le protocole suivant.

### RÉACTIFS ET MATÉRIELS

Les étalons de l'acide jasmonique (JAS) et de l'acide salicylique (SAL) ont été fournis par Sigma-Aldrich (St Louis, USA). L'acide dihydrojasmonique (DHJAS) utilisé comme standard interne pour l'acide jasmonique a été fourni par OlChemin Ltd, (Olomouc, République tchèque), et l'acide ²H₄-salicylique (D-SAL) utilisé comme standard interne pour l'acide salicylique a été fourni par Sigma-Aldrich (St Louis, USA).

Les agitations ont été réalisées dans un système Multi Reax de Heidolph Instruments (Schwabach, Allemagne) et les centrifugations dans une centrifugeuse Centrikon T-124 de Kontron Instruments (Zurich, Suisse). Les évaporations ont été réalisées dans un évaporateur vortex modèle 432-2100 de Labconco Corporation (Kansas City, MO, USA).

### METHODE D'EXTRACTION

On pèse 0,25 grammes de tissu végétal (poids frais) auxquels on ajoute 100 µl d'une solution de D-SAL et DHJAS (1000 ng/ml dans du méthanol) et 2 ml de MeOH/H₂O/HCOOH (90/9/1 en volume) contenant du diéthyldithiocarbamate de sodium 2,5 mM à -20°C. On agite le tout pendant 60 minutes à la vitesse maximale, 2 000 min⁻¹, et on centrifuge à 11 000 min⁻¹ pendant 10 minutes à 20° C. On introduit 0,5 ml de surnageant dans un tube à essai contenant déjà 0,5 ml d'acide acétique à 0,4% puis on agite et on centrifuge à 12 000 min⁻¹ pendant 10 minutes. On verse une partie du surnageant dans un flacon de chromatographie à partir duquel on l'injecte dans le système LC/MS/MS.

### METHODE CHROMATOGRAPHIQUE

On utilise un chromatographe Waters AllianceHT (Milford, MA, USA) équipé d'un module de séparation 2795 XE, un module de colonne avec régulation de température ALLCOLHTR et une colonne chromatographique Synergi 4 µm Hydro-RP (15 x 0,2 cm) (Phenomenex, Torrance, CA, USA). Le gradient et les conditions utilisés sont les suivants :

| Minutes | ml/min | % de MeOH | % d'acide acétique à 0,4% |
|---|---|---|---|
| 0 | 0,2 | 35 | 65 |
| 1 | 0,2 | 35 | 65 |
| 6 | 0,2 | 60 | 40 |
| 14 | 0,2 | 64 | 36 |
| 15 | 0,2 | 90 | 10 |
| 16 | 0,2 | 90 | 10 |
| 17 | 0,2 | 35 | 65 |
| 20 | 0,2 | 35 | 65 |

Volume d'injection : 40 µl.
Température de l'échantillon : 20° C.
Température de la colonne : 30° C.

### METHODE DE SPECTROMÉTRIE DE MASSE

On utilise un détecteur de spectrométrie de masse 3200 Q TRAP LC/MS/MS System (Applied Biosystems/MDS Sciex, Ontario, Canada), équipé d'une interface Turbo Ion Spray fonctionnant en mode négatif.

Paramètres de la source :
CUR (débit de gaz rideau) : 22,00 psi.
IS (tension du pulvérisateur ionique) : -4000 V.
TEM : 550° C.
GS1 (débit de gaz du nébuliseur) : 45,00 psi.
GS2 (débit de gaz du réchauffeur) : 55,00 psi.

Paramètres de l'analyseur de masse :
Mode de balayage : MRM (multiple reaction monitoring).
Résolution Q1 : basse.
Résolution Q3 : unité.
Gaz CAD (dissociation activée par collision) : moyen.
CXP (potentiel de sortie de la cellule de collision) : -4,00 V.

Paramètres du détecteur :
CEM (multiplicateur d'électrons multicanaux) : -2800,0 V.

Le traitement des données obtenues s'effectue au moyen du logiciel Analyst 1.4.2 d'Applied Biosystems.

### RÉSULTATS

Les résultats sont présentés dans le tableau suivant.

| Composé | Transition | | Paramètres d'ionisation et de collision | | | | |
|---|---|---|---|---|---|---|---|
| | Q1 (uma) | Q3 (uma) | Dwell (ms) | DP (V) | EP (V) | CEP (V) | CE (V) |
| JAS | 209 | 59 | 40 | -35 | -7 | -12 | -22 |
| | 209 | 165 | 40 | -35 | -7 | -12 | -20 |
| DHJAS | 211 | 59 | 40 | -34 | -8 | -13 | -21 |
| | 211 | 167 | 40 | -34 | -8 | -13 | -20 |
| SAL | 137 | 93 | 40 | -25 | -6 | -10 | -20 |
| | 137 | 65 | 40 | -25 | -6 | -10 | -38 |
| D-SAL | 141 | 97 | 40 | -30 | -5,5 | -10 | -20 |
| | 141 | 69 | 40 | -30 | -5,5 | -10 | -36 |

uma = unité de masse atomique
Acide jasmonique (JAS)
Acide salicylique (SAL)
Acide dihydrojasmonique (DHJAS)
Acide ²H₄-salicylique (D-SAL)

Le rendement total, y compris l'effet matrice, a été calculé de deux manières. D'une part, des plantes ont été dopées avec des concentrations en hormones différentes et la soustraction d'avec la plante non dopée a été comparée à des étalons intercalés entre les échantillons à titre de contrôles. Comme indiqué dans les tableaux, le dopage a été réalisé avec différentes concentrations selon l'hormone considérée, compte tenu des différences de sensibilité entre elles ainsi que des différences de concentrations observées dans la plante utilisée, le concombre. Le rendement a également été calculé au moyen du standard interne, comme le quotient entre la moyenne des aires de chaque standard interne dans les échantillons à examiner et dans les étalons intercalés entre les échantillons à titre de contrôles. Les résultats sont les suivants.

Rendement total dans les feuilles :

| | | | | | | | |
|---|---|---|---|---|---|---|---|
| Hormone | + 2,5 | + 5 | + 10 | + 25 | + 50 | + 100 | Std. int. |
| JAS | 73,1 | 102,1 | 99,7 | 98,5 | 99,3 | 98,8 | 92,7 |
| SAL | 73,2 | 103,8 | 98,2 | 97,5 | 99,0 | 101,2 | 94,3 |

Rendement total dans les racines :

| | | | | | | | |
|---|---|---|---|---|---|---|---|
| Hormone | + 2,5 | + 5 | + 10 | + 25 | + 50 | + 100 | Std. int. |
| JAS | 93,7 | 92,5 | 92,4 | 92,4 | 91,8 | 93,6 | 97,5 |
| SAL | 89,0 | 95,0 | 95,2 | 98,5 | 94,5 | 95,2 | 98,1 |

Les valeurs des limites de détection (LD) et de quantification (LQ) ont été calculées en prenant 10 fois le niveau moyen du bruit de fond dans les blancs de même que dans les échantillons végétaux. Le bruit de fond a été mesuré dans les zones du chromatogramme voisines du temps de rétention des hormones. Dans le cas des étalons, les résultats sont exprimés en ng/ml et en picogrammes injectés, et dans le cas des extraits de la plante en ng/g de plante. Les résultats sont les suivants :
Limites de détection LD et de Quantification (LQ):

| Hormone | LD étalons ng/ml (pg) | LD plante ng/g | LQ étalons ng/ml (pg) | LQ plante ng/g |
|---|---|---|---|---|
| JAS | 0,15 (6) | 1,20 | 0,45 (18) | 3,50 |
| SAL | 0,10 (4) | 1,00 | 0,30 (12) | 3,00 |

### CONCLUSION

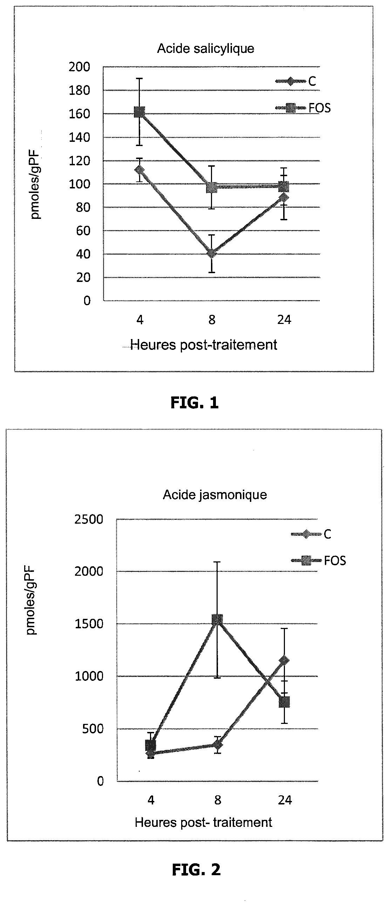

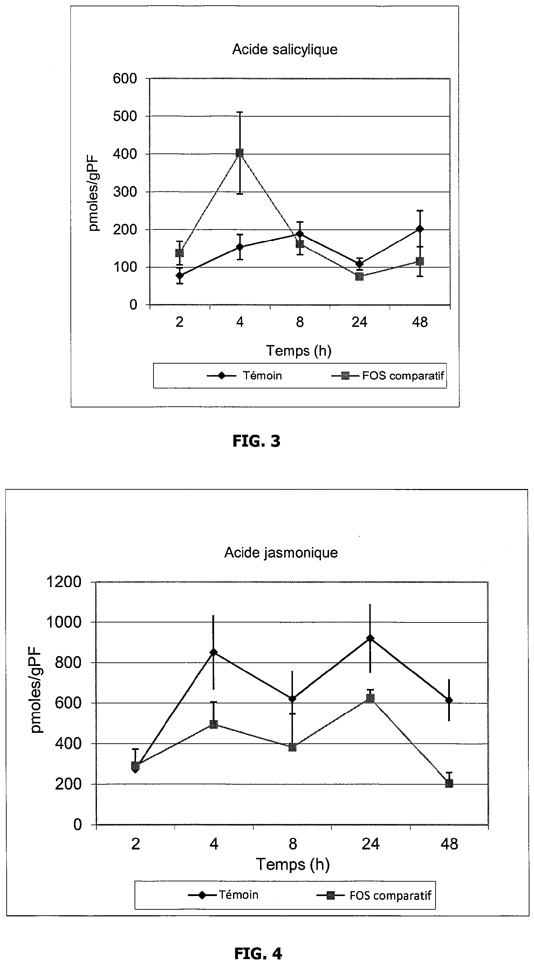

Les résultats ont été reportées aux Figures 1 à 4. On peut voir que l'inuline - qui comprend plus de 10 unités osidiques - n'induit pas une augmentation de la concentration en acide jasmonique.

Par contre, un fructo-oligosaccharide comprenant de 2 à 10 unités osidiques conforme à l'invention induit une concentration de phytohormone 4 à 8 fois supérieure selon les tissus.

## Revendications

1. Composition fertilisante et/ou biostimulante comprenant une ou plusieurs matières fertilisantes choisies parmi l'urée, le sulfate d'ammonium, le nitrate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique et l'acide borique, contenant au moins un fructo-oligosaccharide (FOS) comprenant de 2 à 10 unités osidiques, lequel fructo-oligosaccharide est éventuellement sulfaté, et **caractérisée en ce qu'**elle contient un mélange de composés Glucose-(Fructose)n ou Mannose-(Fructose)n tels que n va de 1 à 3.

2. Composition selon la revendication 1, **caractérisée en ce que** le fructo-oligosaccharide (FOS) représente de 0,1 à 10% en poids du poids de la composition.

3. Composition selon la revendication 1, **caractérisée en ce que** le fructo-oligosaccharide (FOS) est issu de l'hydrolyse enzymatique de l'inuline.

4. Procédé de fertilisation de plantes pour améliorer leur absorption de nutriments minéraux, **caractérisé en ce qu'**il comprend l'application auxdites plantes ou aux sols sur lesquelles elles poussent, d'une quantité efficace d'une composition selon la revendication 1.

5. Procédé pour la biostimulation de plantes qui comprend l'application auxdites plantes ou aux sols sur lesquelles elles poussent, d'une quantité efficace d'une composition selon la revendication 1.

6. Procédé selon la revendication 4 ou 5, **caractérisé en ce que** l'application du FOS ou de la composition aux plantes est réalisée par voie foliaire ou par voie racinaire.

7. Procédé selon la revendication 6, **caractérisé en ce que** le FOS est utilisé en une quantité :
- de 0,1 à 100 g par litre, et de préférence de l'ordre de 1 g par litre pour les apports sous forme liquide par voie foliaire ou dans des solutions nutritives racinaires,
- de 10 à 1000 g et de préférence de l'ordre de 200 g par hectare pour les apports sous forme solide, par exemple, dans des engrais pulvérulents ou granulés.

8. Utilisation d'un mélange de composés Glucose-(Fructose)n ou Mannose-(Fructose)n tels que n va de 1 à 3, comme éliciteur des mécanismes d'absorption des nutriments minéraux dans les plantes et comme agent stimulant les défenses naturelles des plantes.

## Patentansprüche

1. Düngende und/oder biostimulierende Zusammensetzung, umfassend einen oder mehrere Düngestoffe, ausgewählt aus Harnstoff, Ammoniumsulfat, Ammoniumnitrat, natürlichem Phosphat, Kaliumchlorid, Ammoniumsulfat, Magnesiumnitrat, Mangannitrat, Zinknitrat, Kupfernitrat, Phosphorsäure und Borsäure, enthaltend wenigstens ein Fructooligosaccharid (FOS), das 2 bis 10 Zuckereinheiten umfasst, wobei das Fructooligosaccharid eventuell sulfatiert ist, und **dadurch gekennzeichnet, dass** sie eine Mischung aus Glucose-(Fructose)n- oder Mannose-(Fructose)n-Verbindungen, derart, dass n im Bereich von 1 bis 3 liegt, enthält.

2. Zusammensetzung nach Anspruch 1, **dadurch gekennzeichnet, dass** das Fructooligosaccharid (FOS) 0,1 bis 10 Gew.-% des Gewichts der Zusammensetzung ausmacht.

3. Zusammensetzung nach Anspruch 1, **dadurch gekennzeichnet, dass** das Fructooligosaccharid (FOS) aus der enzymatischen Hydrolyse von Inulin hervorgegangen ist.

4. Verfahren zum Düngen von Pflanzen, um deren Aufnahme von mineralischen Nährstoffen zu verbessern, **dadurch gekennzeichnet, dass** es das Aufbringen einer wirksamen Menge einer Zusammensetzung nach Anspruch 1 auf die Pflanzen oder auf die Böden, auf denen sie wachsen, umfasst.

5. Verfahren zur Biostimulation von Pflanzen, das das Aufbringen einer wirksamen Menge einer Zusammensetzung nach Anspruch 1 auf die Pflanzen oder auf die Böden, auf denen sie wachsen, umfasst.

6. Verfahren nach Anspruch 4 oder 5, **dadurch gekennzeichnet, dass** das Aufbringen des FOS oder der Zusammensetzung auf die Pflanzen über die Blätter oder über die Wurzeln erfolgt.

7. Verfahren nach Anspruch 6, **dadurch gekennzeichnet, dass** das FOS in einer Menge verwendet wird:
- von 0,1 bis 100 g pro Liter und vorzugsweise in der Größenordnung von 1 g pro Liter für die Zufuhr in flüssiger Form über die Blätter oder in Wurzelnährlösungen,
- von 10 bis 1000 g und vorzugsweise in der Größenordnung von 200 g pro Hektar für die Zufuhr in fester Form, beispielsweise in pulverförmigen oder granulierten Düngemitteln.

8. Verwendung einer Mischung aus Glucose-(Fructose)n- oder Mannose-(Fructose)n-Verbindungen, derart, dass n im Bereich von 1 bis 3 liegt, als Auslöser von Mechanismen zur Aufnahme mineralischer Nährstoffe in den Pflanzen und als die natürliche Abwehr der Pflanzen stimulierendes Mittel.

## Claims

1. A fertilizing and/or biostimulating composition containing one or more fertilizing materials chosen from urea, ammonium sulfate, ammonium nitrate, natural phosphate, potassium chloride, ammonium sulfate, magnesium nitrate, manganese nitrate, zinc nitrate, copper nitrate, phosphoric acid and boric acid, containing at least one fructooligosaccharide (FOS) comprising from 2 to 10 monosaccharide units, which fructooligosaccharide is optionally sulphated, and **characterized in that** it contains a mixture of Glucose-(Fructose)ₙ or Mannose-(Fructose)ₙ, in which n ranges from 1 to 3.

2. The composition as claimed in claim 1, **characterized in that** the fructooligosaccharide (FOS) represents from 0.1 to 10% by weight of the weight of the composition.

3. The composition as claimed in claim 1, **characterized in that** the fructooligosaccharide (FOS) is derived from the enzymatic hydrolysis of inulin.

4. A method for fertilizing plants to improve their absorption of inorganic nutrients, **characterized in that** it comprises the application, to said plants or to the soils in which they are growing, of an effective amount of a composition as claimed in claim 1.

5. A method for the biostimulation of plants which comprises the application, to said plants or to the soils in which they are growing, of an effective amount of a composition as claimed in claim 1.

6. The method as claimed in claim 4 or 5, **characterized in that** the FOS or the composition is applied to the plants via the leaves or via the roots.

7. The method as claimed in claim 6, **characterized in that** the FOS is used in an amount:
- from 0.1 to 100 g per litre, and preferably of the order of 1 g per litre, when supplied in liquid form via the leaves or in nutritive solutions for the roots,
- from 10 to 1000 g and preferably of the order of 200 g per hectare, when supplied in solid form, for example in pulverulent or granulated fertlizers.

8. The use of a mixture of Glucose-(Fructose)ₙ or Mannose-(Fructose)ₙ, in which n ranges from 1 to 3, to elicit mechanisms for absorption of inorganic nutrients in plants and as agent for stimulating natural plant defenses.
